# EUROPEAN PATENT APPLICATION

(11) **EP 4 177 022 A1**
(43) Date of publication of application: **10.05.2023**
(21) Application number: 21904618.2
(22) Date of filing: 14.09.2021
(51) Int. Cl.: B26D 3/28, D04H 1/4242, H01M 4/88, H01M 4/96, H01M 8/18, B26D 1/02, B26D 3/30, D04H 1/70, D06H 7/00, B65H 35/04, H01M 4/86, H01M 8/0234, B26D 7/01, B26D 7/06

(54) **ELECTRODE, BATTERY CELL, CELL STACK, BATTERY SYSTEM, AND METHOD FOR MANUFACTURING ELECTRODE**

(71) Applicant: Sumitomo Electric Industries, Ltd., Osaka-shi, Osaka 541-0041 (JP)
(72) Inventor: OCHI, Yuta, Osaka-shi, Osaka 541-0041 (JP)
(74) Representative: Boult Wade Tennant LLP
(86) International application number: PCT/JP2021/033821
(87) International publication number: WO 2023/042280

(57) **Abstract**

An electrode used in a battery system, the electrode comprising a sheet made of a nonwoven fabric containing a plurality of carbon fibers. The sheet includes a first surface and a second surface that face each other in a direction along a thickness of the sheet, the plurality of carbon fibers include a first carbon fiber, the first carbon fiber includes at least one of a cut section facing the first surface and a cut section facing the second surface, a width of the sheet is less than or equal to 1000 mm, and a length of the sheet is less than or equal to 2000 mm.

## Description

### TECHNICAL FIELD

The present disclosure relates to an electrode, a battery cell, a cell stack, a battery system, and a method for manufacturing the electrode.

### BACKGROUND ART

PTL 1 discloses the following. A carbon fiber nonwoven fabric wound in a roll shape is prepared. A width of the carbon fiber nonwoven fabric is 1.2 m to 1.5 m. A length of the carbon fiber nonwoven fabric is 20 m to 70 m. The rolled carbon fiber nonwoven fabric runs by being rewound by a winding machine. The running carbon fiber nonwoven fabric passes through between a pair of transport rollers vertically facing each other. The carbon fiber nonwoven fabric that passes through between the pair of transport rollers is cut by a band knife disposed near an outlet of the pair of transport rollers. Two carbon fiber nonwoven fabric layers having equal thickness are produced by this cutting. Each of the produced layers of the two carbon fiber nonwoven fabric is wound by a different winding machine.

### CITATION LIST

### PATENT LITERATURE

PTL 1: National Patent Publication No. 2018-529030

### SUMMARY OF INVENTION

An electrode according to the present disclosure is an electrode used in a battery system, the electrode includes a sheet made of a nonwoven fabric containing a plurality of carbon fibers. The sheet includes a first surface and a second surface that face each other in a direction along a thickness of the sheet, the plurality of carbon fibers include a first carbon fiber, the first carbon fiber includes at least one of a cut section facing the first surface and a cut section facing the second surface, a width of the sheet is less than or equal to 1000 mm, and a length of the sheet is less than or equal to 2000 mm.

The battery cell of the present disclosure includes the electrode of the present disclosure.

The cell stack of the present disclosure includes a plurality of battery cells of the present disclosure.

The battery system of the present disclosure includes the battery cell of the present disclosure or the cell stack of the present disclosure.

A method for manufacturing an electrode according to the present disclosure is the method for manufacturing the electrode used in a battery system, the method includes: preparing a sheet-like first electrode material that has a width less than or equal to 1000 mm and a length less than or equal to 2000 mm and is made of a nonwoven fabric containing a plurality of carbon fibers; and producing the electrode by cutting the first electrode material. The producing the electrode includes: feeding the first electrode material to a cutting tool by rotation of a first roller and a second roller that sandwich the first electrode material; and slicing the first electrode material with the cutting tool such that a thickness of the first electrode material becomes thin.

### BRIEF DESCRIPTION OF DRAWINGS

Fig. 1 is a schematic perspective view illustrating an electrode according to an embodiment.
Fig. 2 is a schematic view showing a part of a section taken along a line II-II in Fig. 1.
Fig. 3 is a sectional view schematically illustrating a section of a carbon fiber constituting the electrode of the embodiment.
Fig. 4 is an explanatory view illustrating a measurement point at which a thickness of the electrode of the embodiment is measured.
Fig. 5 is an explanatory view illustrating the measurement point at which the thickness of the electrode of the embodiment is measured.
Fig. 6 is a perspective view illustrating a method for manufacturing the electrode of the embodiment.
Fig. 7 is a top view illustrating the method for manufacturing the electrode of the embodiment.
Fig. 8 is a sectional view illustrating the method for manufacturing the electrode of the embodiment.
Fig. 9 is a schematic configuration diagram illustrating a redox flow battery system of the embodiment.
Fig. 10 is a schematic configuration diagram illustrating a cell stack included in the redox flow battery system of the embodiment.

### DETAILED DESCRIPTION

### [Problem to be Solved by the Present Disclosure]

In the technique of PTL 1 described above, the carbon fiber nonwoven fabric is cut while tension acts on the carbon fiber nonwoven fabric having a wide width and a long length. For this reason, the technique of PTL 1 cannot produce an electrode having a small variation in thickness. The reason is as follows.

Because of the wide width and the long length of the carbon fiber nonwoven fabric, it is difficult to cut the same position in a thickness direction of the carbon fiber nonwoven fabric along a width direction and a length direction of the carbon fiber nonwoven fabric. In addition, because of the wide width of the carbon fiber nonwoven fabric, it is difficult to uniformly apply the tension in the width direction of the carbon fiber nonwoven fabric. For this reason, it is difficult to cut the same position in the thickness direction of the carbon fiber nonwoven fabric along the width direction of the carbon fiber nonwoven fabric.

An object of the present disclosure is to provide an electrode having a small variation in thickness. An object of the present disclosure is to provide a battery cell including the electrode. An object of the present disclosure is to provide a cell stack including the battery cell. An object of the present disclosure is to provide a battery system including the battery cell or the cell stack. An object of the present disclosure is to provide a method for manufacturing the electrode capable of manufacturing the electrode having the small variation in thickness.

### [Advantageous Effect of the Present Disclosure]

The electrode of the present disclosure has the small variation in thickness.

The battery cell, the cell stack, and the battery system of the present disclosure easily increase current efficiency and easily reduce cell resistivity.

The method for manufacturing the electrode of the present disclosure can manufacture the electrode having the small variation in thickness.

### <<Description of Embodiments of the Present Disclosure>>

First, embodiments of the present disclosure will be listed and described.
(1) An electrode according to one aspect of the present disclosure is an electrode used in a battery system, the electrode includes a sheet made of a nonwoven fabric containing a plurality of carbon fibers. The sheet includes a first surface and a second surface that face each other in a direction along a thickness of the sheet, the plurality of carbon fibers include a first carbon fiber, the first carbon fiber includes at least one of a cut section facing the first surface and a cut section facing the second surface, a width of the sheet is less than or equal to 1000 mm, and a length of the sheet is less than or equal to 2000 mm.

Because the electrode has a narrow width and a short length, a variation in thickness is small. The reason is as follows. The electrode containing the first carbon fiber is manufactured by a later-described method for manufacturing the electrode. The method for manufacturing the electrode is a method for producing the electrode by slicing a first electrode material such that a thickness of the first electrode material becomes thin. In the method for manufacturing the electrode, the width of the first electrode material to be sliced is less than or equal to 1000 mm, and the length of the first electrode material is less than or equal to 2000 mm. That is, the width of the first electrode material is narrow and the length of the first electrode material is short. In addition, in the method for manufacturing the electrode, the first electrode material is fed to a cutting tool that slices the first electrode material by rotation of a first roller and a second roller that sandwich the first electrode material. That is, in the above manufacturing method, the first electrode material is sliced without substantially applying tension to the first electrode material. The phrase "the tension does not substantially act" means that the tension accompanying winding of the first electrode material does not act downstream of the first roller and the second roller. When the first electrode material is wound downstream of the first roller and the second roller, the tension acts on the first electrode material, and a first variation in later-described thickness of the produced electrode exceeds 25%. The tension caused by being sandwiched between the first roller and the second roller is allowed to act on the first electrode material. Thus, in the method for manufacturing the electrode, the same position in the thickness direction of the first electrode material is easily cut along the width direction and the length direction of the first electrode material.

The electrode has a small variation in thickness, so that local degradation of battery performance is hardly generated. Thus, the electrode easily constructs a battery cell, a cell stack, and a battery system having excellent battery performance. Specifically, the electrode easily constructs the battery cell, the cell stack, and the battery system having the high current efficiency and the low cell resistivity.

(2) As one form of the electrode, an average thickness of the sheet may be greater than or equal to 0.5 mm and less than or equal to 3 mm.

The sheet having the average thickness greater than or equal to 0.5 mm easily constructs the battery cell, the cell stack, and the RF battery system having excellent battery performance. In addition, the sheet having the average thickness greater than or equal to 0.5 mm is excellent in mechanical strength.

Even in the sheet having an average thickness less than or equal to 3 mm, the variation in thickness is small. In the technique of PTL 1 described above, the carbon fiber nonwoven fabric is cut while tension acts on the carbon fiber nonwoven fabric having a wide width and a long length. In the technique of PTL 1 described above, because of the method for producing two electrodes having the equal thickness, the thickness of the carbon fiber nonwoven fabric becomes also thin when the thin electrode is produced. As the thickness of the carbon fiber nonwoven fabric becomes thinner, it becomes more difficult to uniformly apply the tension in the width direction of the carbon fiber nonwoven fabric. For this reason, as the thickness of the carbon fiber nonwoven fabric decreases, it is difficult to cut the same position in the thickness direction of the carbon fiber nonwoven fabric along the width direction of the carbon fiber nonwoven fabric. Even when the electrode having the thickness less than or equal to 1 mm is attempted to be produced by the technique of PTL 1 described above, the electrode having the small variation in thickness cannot be manufactured. On the other hand, in the method for manufacturing the electrode to be described later, the first electrode material has the narrow width and the short length, and the first electrode material is sliced without substantially applying the tension to the first electrode material. Thus, in the method for manufacturing the electrode to be described later, the electrode having the small variation in thickness can be manufactured even when the thickness of the produced electrode is thin. In particular, in the method for manufacturing the electrode described later, the electrode having the small variation in thickness can be manufactured even when the electrode having the thickness less than or equal to 1 mm is produced. In addition, the sheet having the average thickness less than or equal to 3 mm easily constructs the thin battery cell and the thin cell stack. Thus, the sheet having the average thickness less than or equal to 3 mm easily downsizes the battery system.

(3) As one form of the electrode, the length of the sheet may be greater than or equal to 500 mm.

The sheet having the length greater than or equal to 500 mm easily constructs the high-output battery cell, cell stack, and battery system.

(4) As one form of the electrode, a variation in thickness of the sheet may be less than or equal to 25%.

When the variation in thickness is less than or equal to 25%, the battery performance of the electrode tends to be uniform over the entire region of the electrode. The variation in thickness is a later-described first variation in thickness.

(5) As one form of the electrode, a variation in quantity per unit area amount of the sheet may be less than or equal to 25%.

When the variation in quantity per unit area amount is less than or equal to 25%, conductivity of the electrode and flowability of an electrolytic solution tend to be uniform over the entire region of the electrode. The variation in quantity per unit area amount is a later-described first variation in quantity per unit area amount.

(6) As one form of the electrode, the quantity per unit area amount of the sheet may be greater than or equal to 50 g/m² and less than or equal to 350 g/m².

In the sheet having the quantity per unit area amount greater than or equal to 50 g/m², the number of contacts between carbon fibers is easy to increase, so that the conductivity is easy to increase. In the sheet having the quantity per unit area amount less than or equal to 350 g/m², pores are easy to secure, so that the sheet has the excellent flowability of the electrolytic solution.

(7) As one form of the electrode, the plurality of carbon fibers may include a carbon fiber having a plurality of pleats on a surface of the carbon fiber.

A surface area of the carbon fiber tends to become large by including a plurality of pleats on the surface of the carbon fiber. The carbon fiber having the large surface area are likely to increase a reaction area in contact with the electrolytic solution. Consequently, the reactivity between the electrode and the electrolytic solution is improved.

(8) As one form of the electrode, density of the plurality of carbon fibers may be greater than or equal to 1.5 g/cm³ and less than or equal to 2.2 g/cm³, and a porosity of the sheet may be greater than or equal to 60% and less than or equal to 99%.

When the density of the carbon fiber is greater than or equal to 1.5 g/cm³, there are many conductive components. The electrode containing the carbon fiber easily constructs the battery cell having low internal resistance. When the density of the carbon fiber is less than or equal to 2.2 g/cm³, rigidity of the carbon fiber is not too high. The electrode containing the carbon fiber easily constructs the battery cell in which a membrane is hardly damaged.

When the porosity of the sheet is greater than or equal to 60%, the number of pores is larger than that of the sheet having the porosity of less than 60%. The sheet has the excellent flowability of the electrolytic solution. When the porosity of the sheet is less than or equal to 99%, the electrode has the excellent battery reactivity.

(9) A battery cell according to one aspect of the present disclosure includes the electrode described in any one of (1) to (8).

Because the battery cell includes the electrode having the small variation in thickness, the current efficiency is easy to increase and the cell resistivity is easy to reduce.

(10) A cell stack according to one aspect of the present disclosure includes a plurality of the battery cells described in (9).

Because the cell stack includes the plurality of battery cells, the current efficiency is easy to increase and the cell resistivity is easy to reduce.

(11) A battery system according to one aspect of the present disclosure includes the battery cell described in (9) or the cell stack described in (10).

Because the battery system includes the battery cell or the cell stack, the current efficiency is easy to increase and the cell resistivity is easy to reduce.

(12) A method for manufacturing an electrode according to one aspect of the present disclosure is the method for manufacturing the electrode used in a battery system, the method includes: preparing a sheet-like first electrode material that has a width less than or equal to 1000 mm and a length less than or equal to 2000 mm and is made of a nonwoven fabric containing a plurality of carbon fibers; and producing the electrode by cutting the first electrode material. The producing the electrode includes: feeding the first electrode material to a cutting tool by rotation of a first roller and a second roller that sandwich the first electrode material; and slicing the first electrode material with the cutting tool such that a thickness of the first electrode material becomes thin.

In the manufacturing method, the electrode having the small variation in thickness can be produced. In the manufacturing method, the width of the first electrode material to be sliced is less than or equal to 1000 mm, and the length of the first electrode material is less than or equal to 2000 mm. That is, the width of the first electrode material is narrow and the length of the first electrode material is short. In addition, in the manufacturing method, the first electrode material is fed to a cutting tool that slices the first electrode material by rotation of a first roller and a second roller that sandwich the first electrode material. That is, in the above manufacturing method, the first electrode material is sliced without substantially applying tension to the first electrode material. Therefore, in the manufacturing method, the same position in the thickness direction of the first electrode material is easily cut along the width direction and the length direction of the first electrode material.

(13) As one form of the method for manufacturing the electrode, in the slicing the first electrode material, the first electrode material may be sliced such that an average thickness of the electrode may be greater than or equal to 0.5 mm and less than or equal to 3 mm.

In the form, the electrode having the small variation in thickness can be manufactured even when the average thickness satisfies the above range.

(14) As one form of the method for manufacturing the electrode, in the preparing the first electrode material, the first electrode material having the thickness greater than twice the average thickness of the electrodes may be prepared, and in the slicing the first electrode material, the first electrode material is sliced such that the electrode and a second electrode material having the thickness larger than the average thickness of the electrode are produced.

In the form, at least two electrodes can be produced from one first electrode material. The reason is that because the thickness of the produced second electrode material is greater than one time the average thickness of the electrodes, at least one electrode can be produced by slicing the second electrode material again as the first electrode material. That is, in the form, the slicing can be performed at least twice.

As in the form, the method of unevenly slicing the first electrode material so as to produce the electrode and the second electrode material that have different thicknesses has less restriction on the thickness of the first electrode material to be prepared as compared with the method of evenly slicing the first electrode material so as to produce two electrodes having equal thicknesses. This is because the thickness of the first electrode material needs to be greater than twice the average thickness of the electrodes in the non-uniform slicing method, whereas the thickness of the first electrode material needs to be 2 of n-th power times the average thickness of the electrodes in the uniform slicing method. N is an integer greater than or equal to 1.

(15) As one form of the method for manufacturing the electrode, in the preparing the first electrode material, the first electrode material having the thickness that may be an integral multiple greater than or equal to three times the average thickness of the electrodes may be prepared, and in the slicing the first electrode material, the first electrode material is sliced such that the electrode and the second electrode material having the thickness larger than the average thickness of the electrode are produced.

In the form, at least three electrodes can be produced from one first electrode material. This is because the thickness of the produced second electrode material is an integral multiple greater than or equal to twice the thickness of the electrode, so that at least two electrodes can be produced by slicing the second electrode material again as the first electrode material. That is, in the form, the slicing can be performed at least twice.

In the form, even when the slicing is repeated, a remaining portion having the thickness smaller than the average thickness of the electrode is not produced. Thus, in the form, the electrode can be produced without leaving the first electrode material.

(16) As one form of the method for manufacturing the electrode of (14) or (15), in the slicing the first electrode material, the first electrode material may be sliced such that the electrode flows downward than an installation position of the cutting tool and such that the second electrode material flows upward than the installation position.

In the form, carbon fiber chips generated by cutting are hardly clogged between the first roller and the second roller, and the first electrode material as compared with the case where the electrode flows upward of the installation position of the cutting tool and the second electrode material flows downward of the installation position of the cutting tool.

(17) As one form of the method for manufacturing the electrode, in the feeding the first electrode material to the cutting tool, the first electrode material may be fed to the cutting tool while a guide regulates displacement in a width direction of the first electrode material.

In the form, because the first electrode material is easily moved substantially straight toward between the first roller and the second roller, the electrode having the small variation in thickness is easy to manufacture.

### <<Description of Embodiment>>

Details of an electrode, an electrode manufacturing method, and a battery system according to an embodiment of the present disclosure will be described below. The battery refers to a battery in which a carbon material is used for an electrode or the like, such as a redox flow battery, a fuel cell, or a lithium ion cell. The following battery system will be described by taking a redox flow battery system as an example. The redox flow battery system is sometimes referred to as an RF battery system. In the drawings, the same reference numerals indicate the same names.

### <<Embodiment>>

### [Electrode]

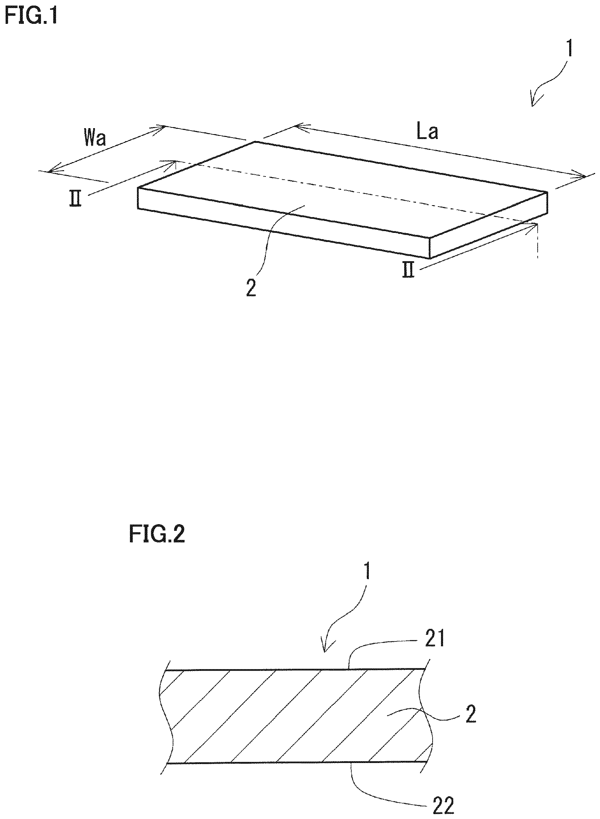

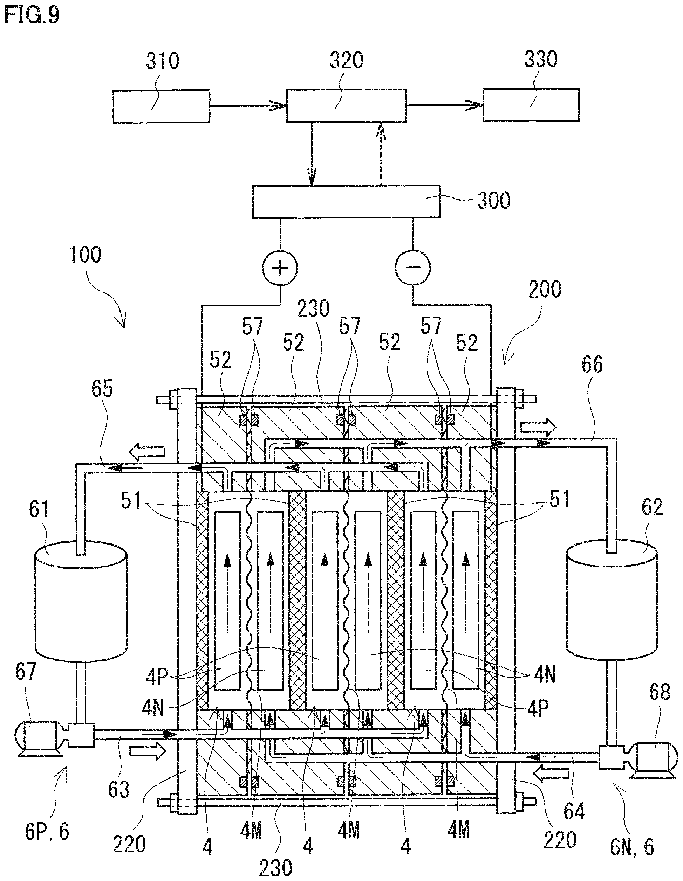

With reference to Figs. 1 to 8, an electrode 1 according to an embodiment will be described. Electrode 1 is used in an RF battery system 100 described later with reference to Fig. 9. Electrode 1 includes a sheet 2 made of a nonwoven fabric containing a plurality of carbon fibers. One of the features of electrode 1 of the embodiment is to satisfy the following requirements (a1) and (b 1).
(a1) As illustrated in Fig. 1, sheet 2 has a specific width Wa and a specific length La.
(b 1) The plurality of carbon fibers have the specific first carbon fiber.

Electrode 1 of the embodiment in Fig. 1 constitutes at least one of a positive electrode 4P and a negative electrode 4N described later with reference to Fig. 9. Electrode 1 contributes to a battery reaction in RF battery system 100 of Fig. 9.

### [Sheet]

Sheet 2 contains the carbon fiber as a main component. The phrase "mainly contains the carbon fiber" means that a ratio of the weight of the carbon fiber to the weight of sheet 2 is greater than or equal to 50%. The ratio of the weight of the carbon fiber to the weight of sheet 2 may be greater than or equal to 60%, particularly greater than or equal to 70%. Sheet 2 is the nonwoven fabric containing the plurality of carbon fibers. The nonwoven fabric is obtained by entangling independent carbon fibers. The plurality of carbon fibers constitute a three-dimensional network structure. A pore is provided between the carbon fibers, namely, a gap of the network. Sheet 2 may contain at least one of a binder, a carbon particle, a catalyst, a hydrophilic material, and a hydrophobic material. The binder settles the carbon fibers. The carbon particle increases a surface area of sheet 2. The catalyst promotes the battery reaction. As illustrated in Fig. 2, sheet 2 includes a first surface 21 and a second surface 22 facing each other in a direction along the thickness of sheet 2. At least one of first surface 21 and second surface 22 is the cut section.

The plurality of carbon fibers include the first carbon fiber. The first carbon fiber includes at least one of the cut section facing first surface 21 and the cut section facing second surface 22. An example of the number of the first carbon fibers is plural. That is, when first surface 21 is the cut section, the cut sections of the plurality of first carbon fibers are arranged side by side in first surface 21. When second surface 22 is also the cut section similarly to first surface 21, the cut sections of the plurality of first carbon fibers are arranged on the second surface 22 similarly to first surface 21.

The plurality of carbon fibers further include a second carbon fiber. Unlike the first carbon fiber, each second carbon fiber has neither the cut section facing first surface 21 nor the cut section facing second surface 22. When second surface 22 is a non-cut section, a middle portion in a longitudinal direction of the second carbon fiber faces second surface 22. End faces of the second carbon fibers are not aligned with second surface 22 and are randomly disposed. When second surface 22 is the non-cut section, the cut surfaces of the plurality of first carbon fibers are not aligned on second surface 22.

### (Planar shape)

As illustrated in Fig. 1, a planar shape of sheet 2 is a rectangular shape. The planar shape is a shape when first surface 21 or second surface 22 is viewed from the thickness direction of sheet 2. The rectangular shape includes a rectangle and a square. When the planar shape of sheet 2 is the rectangle, an example of the ratio of a long side to a short side of sheet 2 is greater than 1 and less than or equal to 5. The ratio may further be greater than 1 and less than or equal to 3, and particularly greater than 1 and less than or equal to 2.

### (Width)

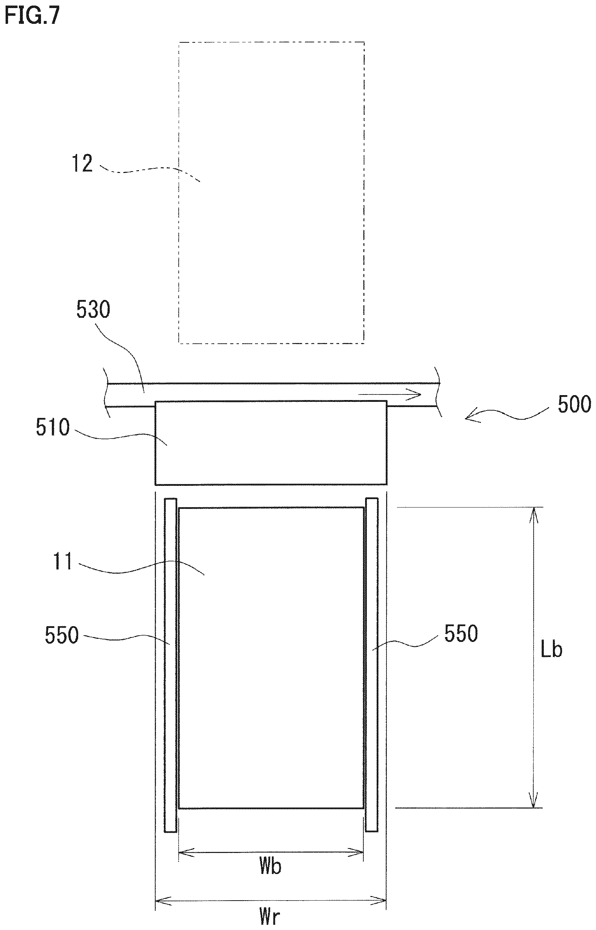

Width Wa of sheet 2 is less than or equal to 1000 mm. Because width Wa is less than or equal to 1000 mm, the variation in thickness of sheet 2 is small. A width Wb of a first electrode material 11 prepared in the method for manufacturing the electrode of the embodiment described later with reference to Fig. 7 is maintained as width Wa. For example, sheet 2 having width Wa of 1000 mm is produced using first electrode material 11 having width Wb of 1000 mm. When width Wb is less than or equal to 1000 mm, the same position in the thickness direction of first electrode material 11 is easily cut along the width direction of first electrode material 11 in the method for manufacturing the electrode of the embodiment. Consequently, sheet 2 having the small variation in thickness is obtained in the method for manufacturing the electrode of the embodiment. As width Wa is smaller, the variation in thickness of sheet 2 tends to be smaller. Width Wa is further less than or equal to 750 mm, particularly less than or equal to 500 mm. An example of a lower limit value of width Wa is 200 mm. Sheet 2 having width Wa greater than or equal to 200 mm easily constructs high-output battery cell, cell stack, and RF battery system. Width Wa is greater than or equal to 200 mm and less than or equal to 1000 mm, further greater than or equal to 300 mm and less than or equal to 750 mm, and particularly greater than or equal to 350 mm and less than or equal to 500 mm. Width Wa is the maximum width of sheet 2.

### (Length)

Length La of sheet 2 is less than or equal to 2000 mm. Because length La is less than or equal to 2000 mm, the variation in thickness of sheet 2 is small. A length Lb of first electrode material 11 in Fig. 7 is maintained as length La. For example, sheet 2 having length La of 2000 mm is produced using first electrode material 11 having length Lb of 2000 mm. When length Lb is less than or equal to 2000 mm, the same position in the thickness direction of first electrode material 11 is easily cut along the length direction of first electrode material 11 in the method for manufacturing the electrode of the embodiment. Consequently, sheet 2 having the small variation in thickness is obtained in the method for manufacturing the electrode of the embodiment. As the length La is smaller, the variation in the thickness of sheet 2 tends to be smaller. Length La is further less than or equal to 1500 mm, particularly less than or equal to 1000 mm. An example of the lower limit value of length La is 500 mm. Sheet 2 having length La greater than or equal to 500 mm easily constructs the high-output battery cell, cell stack, and RF battery system. Length La is greater than or equal to 500 mm and less than or equal to 2000 mm, further greater than or equal to 650 mm and less than or equal to 1500 mm, and particularly greater than or equal to 750 mm and less than or equal to 1000 mm. Length La may be greater than or equal to 500 mm and less than or equal to 1000 mm. Length La is the maximum length of sheet 2.

### (Average thickness)

An example of the average thickness of the sheet 2 is greater than or equal to 0.5 mm and less than or equal to 3 mm. Sheet 2 having the average thickness greater than or equal to 0.5 mm easily constructs the battery cell, the cell stack, and the RF battery system having excellent battery performance. In addition, sheet 2 having the average thickness greater than or equal to 0.5 mm is excellent in mechanical strength. Sheet 2 having the average thickness less than or equal to 3 mm easily constructs the thin battery cell and cell stack. Thus, sheet 2 having the average thickness less than or equal to 3 mm easily constructs the compact RF battery system. An example of the average thickness of sheet 2 is greater than or equal to 0.5 mm and less than or equal to 2.5 mm, further greater than or equal to 0.6 mm and less than or equal to 2.0 mm, and particularly greater than or equal to 0.8 mm and less than or equal to 1.5 mm.

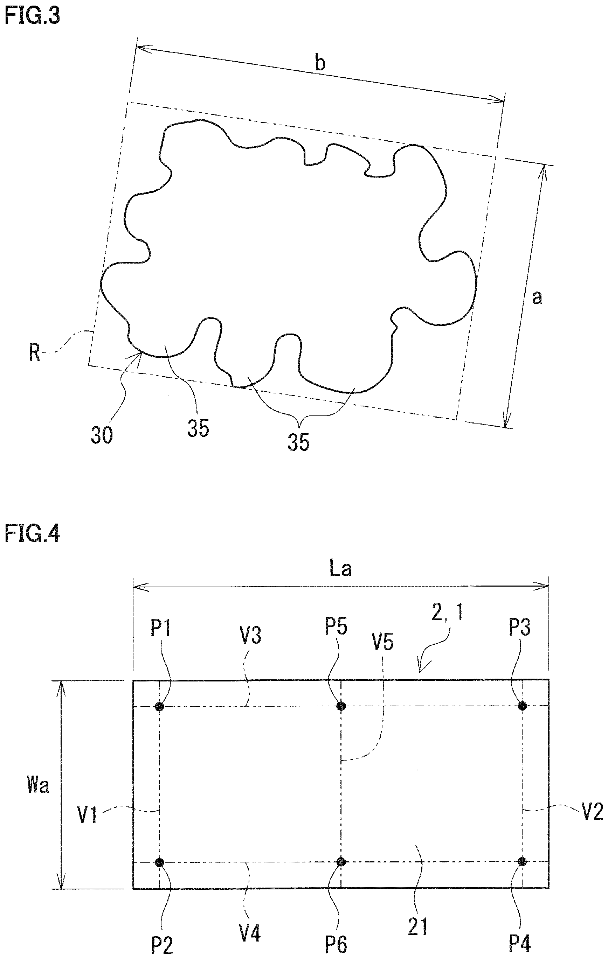

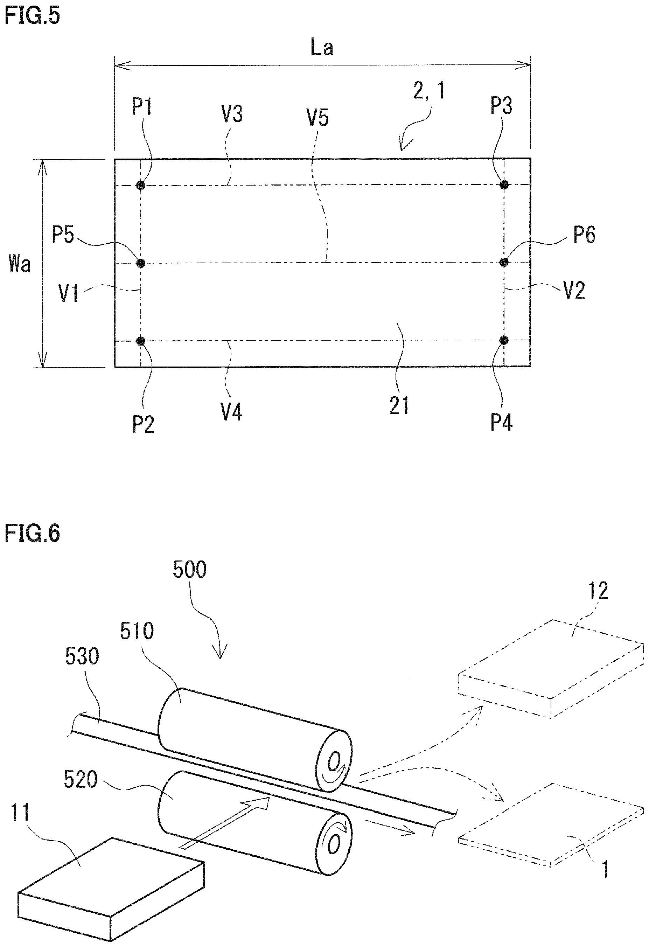

The average thickness of sheet 2 is obtained as follows. The number of measurement points of the thickness is set to greater than or equal to 6. As illustrated in Fig. 4 or 5, an example of the measurement point is at least a first intersection P1 to a sixth intersection P6.

First intersection P1 is an intersection of a first virtual line V1 and a third virtual line V3.

Second intersection P2 is an intersection between first virtual line V1 and a fourth virtual line V4.

Third intersection P3 is an intersection between a second virtual line V2 and third virtual line V3.

Fourth intersection P4 is an intersection between second virtual line V2 and fourth virtual line V4.

In Fig. 4, fifth intersection P5 is an intersection between a fifth virtual line V5 and third virtual line V3.

In Fig. 5, fifth intersection P5 is an intersection between first virtual line V1 and fifth virtual line V5.

In Fig. 4, sixth intersection P6 is an intersection between fifth virtual line V5 and fourth virtual line V4.

In Fig. 5, sixth intersection P6 is an intersection between second virtual line V2 and fifth virtual line V5.

First virtual line V1 is a straight line along the width direction of sheet 2, and is a straight line in which a distance from a first short side of sheet 2 to first virtual line V1 is greater than or equal to length La × 0.1 times and less than or equal to length La × 0.2 times.

Second virtual line V2 is a straight line along the width direction of sheet 2, and is a straight line in which a distance from a second short side of sheet 2 to a second virtual line V2 is greater than or equal to length La × 0.1 times and less than or equal to length La × 0.2 times.

The distance from the first short side to first virtual line V1 and the distance from the second short side to second virtual line V2 are the same.

Third virtual line V3 is a straight line along the length direction of sheet 2, and is a straight line in which a distance from the first long side of sheet 2 to third virtual line V3 is greater than or equal to width Wa × 0.1 times and less than or equal to width Wa × 0.2 times.

Fourth virtual line V4 is a straight line along the length direction of sheet 2, and is a straight line in which a distance from the second long side of sheet 2 to fourth virtual line V4 is greater than or equal to width Wa × 0.1 times and less than or equal to width Wa × 0.2 times.

The distance from the first long side to third virtual line V3 and the distance from the second long side to fourth virtual line V4 are the same.

In Fig. 4, fifth virtual line V5 is a straight line that equally divides first virtual line V1 and second virtual line V2. In Fig. 5, fifth virtual line V5 is a straight line that equally divides third virtual line V3 and fourth virtual line V4.

The measurement point may be selected from the above range according to the width and length of sheet 2 such that at least six measurement points can be collected.

When the number of measurement points is increased, the virtual line may be taken so as to satisfy at least one of the following requirements (a2) and (b2).
(a2) A plurality of intersections are arranged at equal intervals between first intersection P1 and third intersection P3 on third virtual line V3, and a plurality of intersections are arranged at equal intervals between second intersection P2 and fourth intersection P4 on fourth virtual line V4.
(b2) A plurality of intersections are arranged at equal intervals between first intersection P1 and second intersection P2 on first virtual line V1, and a plurality of intersections are arranged at equal intervals between third intersection P3 and fourth intersection P4 on second virtual line V2.

At least two virtual lines that equally divide first virtual line V1 and second virtual line V2 are taken in order to satisfy requirement (a2).

At least two virtual lines that equally divide third virtual line V3 and fourth virtual line V4 are taken in order to satisfy requirement (b2).

The thickness at each intersection is obtained by measurement according to A method (JIS method) of JIS L 1096: 2010. Specifically, the thickness of each intersection is measured using a commercially available thickness measuring apparatus for a certain time and under a certain pressure. A contact type digital cinex gauge SMD-565 J-L manufactured by TECLOCK Corporation is used as a thickness measuring apparatus. The above time is set to 10 seconds. The pressure is set to 0.7 kPa. The average value of all the measured thicknesses is taken as the average thickness of sheet 2.

### (Variation in thickness)

An example of a first variation in thickness of sheet 2 is less than or equal to 25%. The first variation in thickness is obtained by "(standard deviation of thickness/average value of thickness) × 100". The standard deviation of the thickness is a value based on the measured value at each intersection and the average thickness of sheet 2. The average value of the thicknesses is the average thickness of sheet 2 described above. When the first variation in thickness is less than or equal to 25%, the battery performance of electrode 1 tends to be uniform over the entire area of electrode 1. The first variation in thickness is preferable as small as possible. An example of the lower limit value of the first variation in thickness is practically 2%. The first variation in thickness is greater than or equal to 2% and less than or equal to 25%, further greater than or equal to 5% and less than or equal to 20%, and particularly greater than or equal to 6% and less than or equal to 15%. The first variation in thickness may be greater than or equal to 2% and less than or equal to 15%.

An example of a second variation in thickness of sheet 2 is less than or equal to 30%. The second variation in thickness is obtained by "{(maximum value of thickness - minimum value of thickness)/average value of thickness} × 100". The maximum value of the thickness refers to the maximum thickness in the thicknesses of all the intersections measured to obtain the average thickness of sheet 2 described above. The minimum value of the thickness refers to the minimum thickness among the thicknesses of all the intersections. When the second variation in thickness is less than or equal to 30%, the battery performance of electrode 1 tends to be uniform over the entire region of electrode 1. The second variation in thickness is preferable as small as possible. An example of the lower limit value of the second variation in thickness is practically 3%. The second variation in thickness is greater than or equal to 3% and less than or equal to 30%, further greater than or equal to 5% and less than or equal to 25%, and particularly greater than or equal to 6% and less than or equal to 20%.

### (Variation in quantity per unit area amount)

An example of the first variation in quantity per unit area amount of sheet 2 is less than or equal to 25%. The first variation in quantity per unit area amount is obtained by "(standard deviation of quantity per unit area amount/average value of quantity per unit area amount) × 100". The standard deviation of the quantity per unit area amount is a value based on the measurement value of the quantity per unit area amount of each measurement piece and the average value of the quantity per unit area amount. The average value of the quantity per unit area amount is obtained as follows. At least six measurement pieces are cut out from one sheet 2. Each of the measurement pieces has a square shape centered on each of the intersections. The length of one side of each measurement piece is se to 30 mm. The quantity per unit area amount of each measurement piece is obtained by measuring the weight per unit area. The average value of all the obtained quantity per unit area amounts is obtained. When the first variation in quantity per unit area amount is less than or equal to 25%, the conductivity of electrode 1 and the flowability of the electrolytic solution tend to be uniform over the entire region of electrode 1. The first variation in quantity per unit area amount is preferable as small as possible. An example of the lower limit value of the first variation in quantity per unit area amount is practically 2%. The first variation in quantity per unit area amount is greater than or equal to 2% and less than or equal to 25%, further greater than or equal to 5% and less than or equal to 20%, and particularly greater than or equal to 6% and less than or equal to 15%. The first variation in quantity per unit area amount may be greater than or equal to 2% and less than or equal to 15%.

An example of the second variation in quantity per unit area amount of sheet 2 is less than or equal to 50 g/m². The second variation in quantity per unit area amount is obtained by "maximum value of quantity per unit area amount - minimum value of quantity per unit area amount". The maximum value of the quantity per unit area amount refers to the maximum quantity per unit area amount in the quantity per unit area amounts of all the measurement pieces measured to obtain the average value of the quantity per unit area amounts. The minimum value of the quantity per unit area amount refers to the minimum quantity per unit area amount in the quantity per unit area amounts of all the measurement pieces. When the second variation in quantity per unit area amount is less than or equal to 50 g/m², the conductivity of electrode 1 and the flowability of the electrolytic solution tend to be uniform over the entire region of electrode 1. The second variation in quantity per unit area amount is preferable as small as possible. An example of the lower limit value of the second variation in quantity per unit area amount is 2 g/m². The second variation in quantity per unit area amount is greater than or equal to 2 g/m² and less than or equal to 50 g/m², further greater than or equal to 4 g/m² and less than or equal to 35 g/m², and particularly greater than or equal to 5 g/m² and less than or equal to 20 g/m².

### (Quantity per unit area amount)

An example of the quantity per unit area amount of sheet 2 is greater than or equal to 50 g/m² and less than or equal to 350 g/m². The quantity per unit area amount of sheet 2 is the quantity per unit area amount of entire one sheet 2. The quantity per unit area amount is obtained by measuring the weight per unit area. In sheet 2 having the quantity per unit area amount greater than or equal to 50 g/m², the number of contact points between carbon fibers is easy to increase, so that the conductivity is easy to increase. Sheet 2 having the quantity per unit area amount less than or equal to 350 g/m² easily secures the pore, so that sheet 2 has the excellent flowability of the electrolytic solution. The quantity per unit area amount of sheet 2 is further greater than or equal to 70 g/m² and less than or equal to 300 g/m², and particularly greater than or equal to 80 g/m² and less than or equal to 250 g/m².

### (Porosity)

An example of porosity of sheet 2 is greater than or equal to 60% and less than or equal to 99%. When the porosity of sheet 2 is greater than or equal to 60%, the number of pores is larger than that of the sheet having the porosity of less than 60%. Sheet 2 has the excellent flowability of the electrolytic solution. When the porosity of sheet 2 is less than or equal to 99%, electrode 1 has the excellent battery reactivity. The porosity of sheet 2 is greater than or equal to 60% and less than or equal to 95%, further greater than or equal to 65% and less than or equal to 94%, and particularly greater than or equal to 75% and less than or equal to 90%. The porosity is obtained by " 100 - [{ quantity per unit area amount (g/m²)/average thickness (mm)/1000/density (g/cm³)} × 100]". The density is density of the carbon fiber. The density of the carbon fiber will be described later.

### (Pleat)

As illustrated in Fig. 3, the plurality of carbon fibers include a carbon fiber 30 including a plurality of pleats 35 on the surface in the embodiment. Fig. 3 schematically illustrates a contour of a section of carbon fiber 30. Carbon fiber 30 has a pleated irregular structure on the surface of carbon fiber 30. The surface area of carbon fiber 30 is easily increased by including the plurality of pleats 35 on the surface of carbon fiber 30. In carbon fiber 30 having the large surface area, a reaction area in contact with the electrolytic solution tends to increase. Consequently, the reactivity between electrode 1 and the electrolytic solution is improved. The sectional shape of carbon fiber 30 is a heteromorphic sectional shape. At least one of the first carbon fiber and the second carbon fiber may have pleat 35. The plurality of carbon fibers may include the carbon fiber that does not have pleat 35. All of the plurality of carbon fibers may have no pleat 35. The sectional shape of the carbon fiber that does not have pleat 35 may be, for example, a circular shape and an elliptical shape.

### (Peripheral length ratio L1/L2)

An example of a peripheral length ratio L1/L2 between a circumferential length L1 and a circumferential length L2 is greater than 1. Circumferential length L1 is a circumferential length of the section of carbon fiber 30. Circumferential length L2 is a circumferential length of a virtual rectangle R circumscribing the section of carbon fiber 30.

When peripheral length ratio L1/L2 is greater than 1, the reaction area where carbon fiber 30 and the electrolytic solution are in contact with each other can be sufficiently secured. Thus, the reactivity between electrode 1 and the electrolytic solution is improved. The surface area of carbon fiber 30 is proportional to circumferential length L1. The specific surface area of carbon fiber 30 increases as peripheral length ratio L1/L2 increases. The reaction area between electrode 1 and the electrolytic solution increases as the specific surface area of carbon fiber 30 increases. An example of peripheral length ratio L1/L2 is further greater than or equal to 1.1.

When peripheral length ratio L1/L2 is large, the number of pleats 35 tends to increase. When the number of pleats 35 increases, sometimes pleats 35 may stick to each other or a gap between pleats 35 may be narrowed. In this case, the electrolyte solution hardly enters the gap between pleats 35. For this reason, there is a risk that the effect of increasing the reaction area between electrode 1 and the electrolytic solution is hardly obtained. An example of an upper limit of peripheral length ratio L1/L2 is 2. When peripheral length ratio L1/L2 is less than or equal to 2, the sufficient gap between pleats 35 is easy to secure. Thus, the electrolyte solution easily enters the gap between pleats 35. An example of peripheral length ratio L1/L2 is less than or equal to 1.8, further less than or equal to 1.6, and less than or equal to 1.4.

That is, peripheral length ratio L1/L2 is greater than 1 and less than or equal to 2, greater than 1.1 and less than or equal to 1.8, greater than 1.1 and less than or equal to 1.6, and particularly greater than 1.1 and less than or equal to 1.4.

Circumferential length L1 is obtained as follows. The section of electrode 1 is observed with an optical microscope, a scanning electron microscope (SEM), or the like. The section of electrode 1 is a section cut along the thickness direction of electrode 1. The contour of the section of carbon fiber 30 is extracted from a sectional observation image obtained by this observation. A total length of the extracted contour is measured by image analysis.

A method of obtaining virtual rectangle R is as follows. The contour of the section of carbon fiber 30 is extracted from the sectional observation image. In this section, a rectangle surrounded by a set of first parallel lines and a set of second parallel lines is defined as virtual rectangle R. The first set of parallel lines is a set of parallel lines having a minimum distance between a pair of parallel lines in a pair of parallel lines sandwiching the contour of carbon fiber 30. The second set of parallel lines is a set of parallel lines that becomes a maximum distance between the pair of parallel lines in the pair of parallel lines sandwiching the contour of carbon fiber 30 while being orthogonal to the first set of parallel lines. Circumferential length L2 is "length a of short side of virtual rectangle R × 2 + length b of long side of virtual rectangle R × 2".

In the embodiment, peripheral length ratio L1/L2 is an average value measured as follows. Circumferential length L1 of each section of the plurality of carbon fibers 30 is measured. Virtual rectangle R of the section of each of the plurality of carbon fibers 30 is obtained to measure circumferential length L2 of each virtual rectangle R. Then, peripheral length ratio L1/L2 of each carbon fiber 30 is calculated. An average value of all peripheral length ratios L1/L2 is obtained. For example, the number of carbon fibers 30 to be measured is greater than or equal to 3, and further greater than or equal to 5.

### (Area ratio Sa/Sb)

An example of an area ratio Sa/Sb of an area Sa to an area Sb is greater than or equal to 0.5 and less than or equal to 0.8. Area Sa is an area of the section of carbon fiber 30. Area Sb is an area of virtual rectangle R circumscribing the section of carbon fiber 30. The section of carbon fiber 30 is a section obtained by cutting electrode 1 along the thickness direction of electrode 1.

When area ratio Sa/Sb is greater than or equal to 0.5, it is easy to sufficiently secure strength of carbon fiber 30. Consequently, the strength of electrode 1 is hardly lowered. As area ratio Sa/Sb increases, namely, as area ratio Sa/Sb is closer to 1, the sectional area of carbon fiber 30 in virtual rectangle R becomes larger. As area ratio Sa/Sb increases, the strength of carbon fiber 30 is easy to secure.

On the other hand, as area ratio Sa/Sb increases, there is a fear that the gap between pleats 35 is narrowed. When the gap between pleats 35 is narrowed, the electrolyte solution hardly enters the gap between pleats 35. For this reason, there is a risk that the effect of increasing the reaction area between electrode 1 and the electrolytic solution is hardly obtained. When area ratio Sa/Sb is less than or equal to 0.8, it is easy to sufficiently secure the gap between pleats 35. For this reason, entry of the electrolyte solution into the gap between pleats 35 is hardly inhibited. Consequently, the reaction area between electrode 1 and the electrolytic solution can be secured.

An example of area ratio Sa/Sb is further greater than or equal to 0.55 and less than or equal to 0.75, and particularly greater than or equal to 0.55 and less than or equal to 0.7.

For example, an example of area Sa is greater than or equal to 20 µm² and less than or equal to 320 µm², further greater than or equal to 30 µm² and less than or equal to 300 µm², and particularly greater than or equal to 30 µm² and less than or equal to 90 µm².

Area Sa can be measured by analyzing the above-described sectional observation image. In the embodiment, area ratio Sa/Sb is an average value measured as follows. Area Sa of the section of each of the plurality of carbon fibers 30 is measured. Virtual rectangle R of the section of each of the plurality of carbon fibers 30 is obtained to measure area Sb of each virtual rectangle R. Then, area ratio Sa/Sb of each carbon fiber 30 is calculated. An average value of all area ratios Sa/Sb is obtained. For example, the number of carbon fibers 30 to be measured is greater than or equal to 3, and further greater than or equal to 5.

### (Major diameter of fiber)

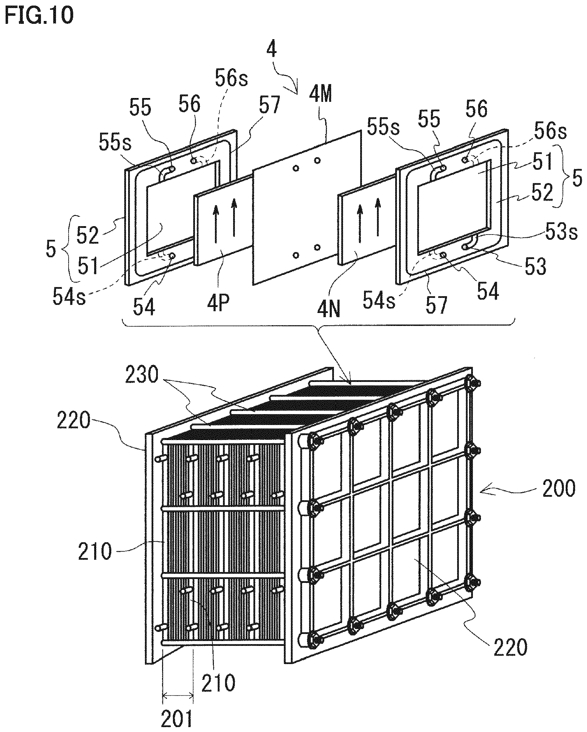

An example of a major diameter of carbon fiber 30 is greater than or equal to 5 µm and less than or equal to 20 µm. The major diameter of carbon fiber 30 corresponds to length b of the long side of virtual rectangle R. When the major diameter of carbon fiber 30 is greater than or equal to 5 µm, the strength of carbon fiber 30 is easy to secure, and the decrease in strength of electrode 1 is prevented. When the major diameter of carbon fiber 30 is less than or equal to 20 µm, carbon fiber 30 is thin. For this reason, carbon fiber 30 has flexibility. Consequently, carbon fiber 30 hardly pierces a membrane 4M described later with reference to the upper view of Fig. 10. When the major diameter of carbon fiber 30 is less than or equal to 20 µm, the reaction area per unit volume of electrode 1 increases. For this reason, the reaction efficiency between electrode 1 and the electrolytic solution is increased. The major diameter of carbon fiber 30 is further less than or equal to 15 µm. A minor diameter of carbon fiber 30 is less than or equal to the major diameter. The minor diameter of carbon fiber 30 corresponds to length a of the short side of virtual rectangle R. An example of the short diameter of carbon fiber 30 is greater than or equal to 2 µm and less than or equal to 15 µm.

The minor diameter and major diameter of carbon fiber 30 are measured as follows. Virtual rectangle R of the section of each of the plurality of carbon fibers 30 is obtained. Length a of the short side and length b of the long side of each virtual rectangle R are measured. The average value of lengths a of all the short sides is set to the minor diameter of carbon fiber 30. The average value of lengths b of all the long sides is set to the major diameter of carbon fiber 30. For example, the number of carbon fibers 30 to be measured is greater than or equal to 3, and further greater than or equal to 5.

Carbon fiber 30 is obtained by firing and carbonizing an organic fiber. Carbon fiber 30 having the plurality of pleats 35 can be produced by firing the heteromorphicsectional organic fiber having the plurality of pleats formed on the surface of the organic fiber. The sectional shape of the organic fiber can be changed depending on the shape of a nozzle hole in a process of extruding a raw material solution of the organic fiber from the nozzle to form the fiber. The organic fiber having the heteromorphic section described above can be produced by forming the plurality of pleats on the surface of the organic fiber using the nozzle in which a plurality of irregularities are formed in the circumferential direction on the inner peripheral surface of the nozzle hole.

### (Density)

An example of the density of the carbon fiber is greater than or equal to 1.5 g/cm³ and less than or equal to 2.2 g/cm³. When the density of the carbon fiber is greater than or equal to 1.5 g/cm³, there are many conductive components. Electrode 1 containing the carbon fiber easily constructs the battery cell having low internal resistance. When the density of the carbon fiber is less than or equal to 2.2 g/cm³, rigidity of the carbon fiber is not too high. In electrode 1 containing the carbon fiber, it is easy to construct the battery cell in which membrane 4M described later with reference to the upper view of Fig. 10 is hardly damaged. The density of the carbon fibers is further greater than or equal to 1.7 g/cm³ and less than or equal to 2.1 g/cm³, and particularly greater than or equal to 1.8 g/cm³ and less than or equal to 2.0 g/cm³. The density of the carbon fiber is obtained by measurement according to a method A of JIS R 7603: 1999: liquid substitution method.

### (Tensile strength)

An example of the tensile strength of sheet 2 is greater than or equal to 40 kPa and less than or equal to 300 kPa. Sheet 2 having the tensile strength greater than or equal to 40 kPa is excellent in strength. Sheet 2 having the tensile strength less than or equal to 300 kPa easily prevents the damage of membrane 4M. The tensile strength of sheet 2 is further greater than or equal to 60 kPa and less than or equal to 200 kPa, and particularly greater than or equal to 70 kPa and less than or equal to 150 kPa. The tensile strength of sheet 2 is obtained by the measurement according to JIS L 1913: 2010.

### [Action and effect of electrode]

In electrode 1 of the embodiment, the first variation in thickness, the second variation in thickness, the first variation in quantity per unit area amount, and the second variation in quantity per unit area amount are small, so that local degradation in battery performance is hardly generated. Thus, electrode 1 of the embodiment can easily construct the battery cell, the cell stack, and the RF battery system having excellent battery performance. Specifically, electrode 1 of the embodiment easily constructs the battery cell, the cell stack, and the RF battery system having high current efficiency and low cell resistivity.

### [Method for manufacturing electrode]

With reference to Figs. 6 to 8, the method for manufacturing the electrode of the embodiment will be described. The method for manufacturing the electrode of the embodiment includes the following processes S1 and S2.

In process S1, sheet-shaped first electrode material 11 is prepared.

In process S2, electrode 1 is produced by cutting first electrode material 11.

Process S2 includes a process S21 and a process S22.

In process S21, first electrode material 11 is fed to a cutting tool 530.

In process S22, first electrode material 11 is sliced by cutting tool 530 such that the thickness of first electrode material 11 is reduced.

Hereinafter, process S1 and process S2 will be described in order.

### [Process S1]

Sheet-shaped first electrode material 11 to be prepared is made of the nonwoven fabric containing the plurality of carbon fibers. The sectional shape, density, and the like of the carbon fiber contained in first electrode material 11 are similar to the sectional shape, the density, and the like of the carbon fiber contained in electrode 1 described above. First electrode material 11 is sliced such that the thickness of first electrode material 11 is reduced in process S22 described later. First electrode material 11 is sliced to produce electrode 1. That is, first electrode material 11 and electrode 1 only have different thicknesses. The planar shape, width Wb, and length Lb of first electrode material 11 are maintained at the planar shape, width Wa, and length La of electrode 1. Width Wa and length La of electrode 1 can be adjusted by adjusting width Wb and length Lb of first electrode material 11. The planar shape of first electrode material 11, a numerical range of width Wb, and a numerical range of length Lb are similar to the planar shape of sheet 2 constituting electrode 1, a numerical range of width Wa, and a numerical range of length La described above. That is, the planar shape of first electrode material 11 is the rectangular shape. Width Wb of first electrode material 11 is less than or equal to 1000 mm. Length Lb of first electrode material 11 is less than or equal to 2000 mm.

Electrode 1 having the small first variation in thickness is easily manufactured by preparing first electrode material 11 having width Wb less than or equal to 1000 mm and length Lb less than or equal to 2000 mm,. In addition, electrode 1 having the small second variation in thickness is easy to manufacture. Furthermore, electrode 1 having the small first variation in the quantity per unit area amount is easy to manufacture. In addition, electrode 1 having the small second variation in the quantity per unit area amount is easy to manufacture. This is because width Wb of first electrode material 11 is less than or equal to 1000 mm and length Lb is less than or equal to 2000 mm, whereby the same position in the thickness direction of first electrode material 11 is easily cut along the width direction and the length direction of first electrode material 11.

The thickness of first electrode material 11 is not particularly limited, but can be appropriately selected as long as the thickness of first electrode material 11 is greater than 1 time the average thickness of produced electrode 1. An example of the thickness of first electrode material 11 is greater than 2 times the average thickness of electrode 1 and an integral multiple greater than or equal to 3 times the average thickness of electrode 1. The thickness of first electrode material 11 is practically an integer multiple less than or equal to 20 times the average thickness of electrode 1, further an integer multiple less than or equal to 15 times, and particularly an integer multiple less than or equal to 10 times. That is, the thickness of first electrode material 11 is an integer multiple greater than or equal to 3 times and less than or equal to 20 times the average thickness of electrode 1, further an integer multiple greater than or equal to 4 times and less than or equal to 15 times, and particularly an integer multiple greater than or equal to 5 times and less than or equal to 10 times.

The numerical ranges of the quantity per unit area amount and the porosity of first electrode material 11 are similar to the numerical ranges of the quantity per unit area amount and the porosity of sheet 2 described above.

### [Process S2]

A cutting machine 500 is used to cut first electrode material 11. Cutting machine 500 includes a first roller 510, a second roller 520, and cutting tool 530.

First roller 510 and second roller 520 are feed rollers that feed first electrode material 11 toward cutting tool 530. First roller 510 and second roller 520 are vertically disposed such that a peripheral surface of first roller 510 and a peripheral surface of second roller 520 face each other. A rotation axis of first roller 510 and a rotation axis of second roller 520 are parallel to each other. First roller 510 and second roller 520 are drive rollers. The drive roller is a roller driven by a drive source such as a motor. A rotation direction of first roller 510 is opposite to a rotation direction of second roller 520.

An interval between first roller 510 and second roller 520 is an interval that satisfies the following requirements (a3) and (b3).

Requirement (a3): pressure acts on first electrode material 11 by sandwiching first electrode material 11 from both sides in the thickness direction of first electrode material 11.

Requirement (b3): first electrode material 11 is moved from upstream to downstream of first roller 510 and second roller 520 by friction between first roller 510 and first electrode material 11 caused by the rotation of first roller 510 and friction between second roller 520 and first electrode material 11 caused by the rotation of second roller 520.

Although not illustrated, cutting machine 500 of the embodiment includes a first mechanism capable of moving at least one of the installation position of first roller 510 and the installation position of second roller 520 such that the interval increases or decreases. Cutting machine 500 includes the first mechanism, so that first electrode material 11 having various thicknesses can be fed to cutting tool 530 by the rotation of first roller 510 and the rotation of second roller 520.

The width of first roller 510 and the width of second roller 520 are the same. The width of first roller 510 is a length along the rotation axis of first roller 510. The width of second roller 520 is a length along the rotation axis of second roller 520. With reference to Fig. 7, a width Wr of first roller 510 will be representatively described. Width Wr of first roller 510 is larger than width Wb of first electrode material 11. An example of width Wr of first roller 510 is less than or equal to 1200 mm. When width Wr of first roller 510 is less than or equal to 1200 mm, width Wr of first roller 510 is not too wide. Thus, the interval is easily maintained uniformly along the width direction. That is, the pressure acting on first electrode material 11 by first roller 510 and second roller 520 can be made uniform in the width direction of first electrode material 11. Consequently, electrode 1 having the small variation in thickness can be manufactured.

Cutting tool 530 is disposed downstream of first roller 510 and second roller 520. Cutting tool 530 is provided in parallel with the rotation axis of first roller 510. In the embodiment, when cutting tool 530 is viewed from above as illustrated in Fig. 7, cutting tool 530 is disposed so as to overlap first roller 510. Unlike the embodiment, although not illustrated, when cutting tool 530 is viewed from above, cutting tool 530 may be disposed away from first roller 510 without overlapping first roller 510. A knife can be used as cutting tool 530. The knife may be provided to run in one direction along the rotation axis of first roller 510, or may be provided to reciprocate along a direction parallel to the rotation axis of first roller 510. A band knife provided in an annular shape can be suitably used as the knife. The band knife runs in one direction in the longitudinal direction of the band knife.

Although not illustrated, cutting machine 500 of the embodiment includes a second mechanism capable of vertically moving the installation position of cutting tool 530. By controlling the second mechanism, the installation position of cutting tool 530 can be set to a position satisfying the following requirement (a4) or requirement (b4).
(a4) First electrode material 11 is evenly sliced.
(b4) First electrode material 11 is unevenly sliced.

For example, when the thickness of first electrode material 11 is twice the average thickness of electrode 1, and when the installation position of cutting tool 530 is the position satisfying requirement (a4), two electrodes 1 having the same thickness can be produced although not illustrated.

For example, when the thickness of first electrode material 11 is greater than 2 times the average thickness of electrode 1 and when the installation position of cutting tool 530 is the position satisfying requirement (b4), electrode 1 and a second electrode material 12 having an average thickness thicker than that of electrode 1 can be produced as illustrated in Fig. 6. Second electrode material 12 is sliced again as first electrode material 11.

When electrode 1 and second electrode material 12 are produced, the installation position of cutting tool 530 can be set to the position satisfying the following requirement (a5) or requirement (b5) by controlling the second mechanism.
(a5) Electrode 1 flows downward than the installation position of cutting tool 530, and second electrode material 12 flows upward than the installation position of cutting tool 530.
(b5) Electrode 1 flows upward than the installation position of cutting tool 530, and second electrode material 12 flows downward than the installation position of cutting tool 530.

The case where the installation position of cutting tool 530 is the position satisfying requirement (a5) is more preferable than the case where the installation position is the position satisfying requirement (b5). This is because the carbon fiber chips generated by cutting are hardly clogged between first roller 510 and first electrode material 11 and between second roller 520 and first electrode material 11 in the case of setting the position satisfying requirement (a5) than in the case of setting the position satisfying requirement (b5).

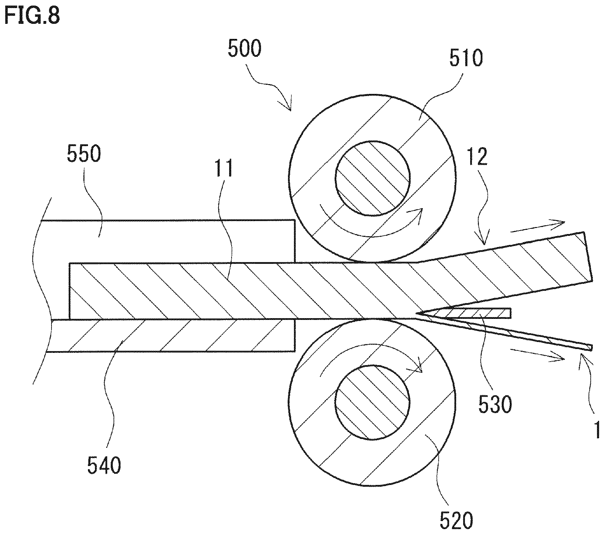

Cutting machine 500 may further include a table 540 in Fig. 8 and a pair of guides 550 in Fig. 7. In Fig. 6, the table and the pair of guides are omitted for convenience of description. In Fig. 7, the table is omitted for convenience of description.

In Fig. 8, one guide is omitted for convenience of description.

As illustrated in Fig. 8, table 540 is disposed on the upstream side of first roller 510 and second roller 520. First electrode material 11 moves toward first roller 510 and second roller 520 on table 540. Although not illustrated, table 540 includes a plurality of rollers. The plurality of rollers are arranged such that the rotation axes of the rollers are parallel to each other. The rotation axis of each roller is parallel to the rotation axis of first roller 510. The plurality of rollers are driven rollers. The driven roller is a roller that is rotated by friction with first electrode material 11, but is not driven by the drive source such as the motor. The plurality of rollers may be drive rollers. The drive roller is a roller that is rotated by the drive source such as the motor. Table 540 includes the plurality of rollers, so that first electrode material 11 easily moves toward first roller 510 and second roller 520 on table 540.

As illustrated in Fig. 7, the pair of guides 550 regulates displacement of first electrode material 11 in the width direction. The pair of guides 550 can straight feed first electrode material 11 toward first roller 510 and second roller 520. Each of the pair of guides 550 is disposed on each side in the width direction of table 540. A protrusion extending along the direction orthogonal to the width direction of table 540 can be suitably used for each of the pair of guides 550. The pair of guides 550 is disposed in parallel to each other. The pair of guides 550 is disposed along the direction orthogonal to the rotation axis of first roller 510. The distance between the pair of guides 550 is slightly larger than width Wb of first electrode material 11.

### (Process S21)

In process S21, first electrode material 11 is sandwiched between first roller 510 and second roller 520, and first roller 510 and second roller 520 rotate to feed first electrode material 11 to cutting tool 530. First electrode material 11 is not pulled from the downstream side of first roller 510 and second roller 520. That is, the tension along the traveling direction of first electrode material 11 is not substantially applied to first electrode material 11, but first electrode material 11 is fed to cutting tool 530. As described above, in the method for manufacturing the electrode of the embodiment, the tension is not substantially applied to first electrode material 11 in the traveling direction of first electrode material 11.

### (Process S22)

In process S22, first electrode material 11 is sliced while the tension along the traveling direction of first electrode material 11 is not substantially applied to first electrode material 11. Thus, cutting tool 530 easily cuts the same position in the thickness direction of first electrode material 11 along the width direction and the length direction of first electrode material 11. In process S22, electrode 1 satisfying the average thickness greater than or equal to 0.5 mm and less than or equal to 3 mm may be produced. In process S22, first electrode material 11 may be sliced such that electrode 1 and second electrode material 12 are produced by slicing first electrode material 11. In addition, first electrode material 11 may be sliced such that electrode 1 flows downward than the installation position of cutting tool 530 and such that second electrode material 12 flows upward than the installation position.

Second electrode material 12 is sliced again as first electrode material 11 by cutting machine 500. That is, processes S21 and S22 are repeated. Depending on the thickness of prepared first electrode material 11, when second electrode material 12 is sliced, there are the case where two electrodes 1 are produced, the case where one electrode 1 and a remaining portion thinner than electrode 1 are produced, and the case where one electrode 1 and a third electrode material thicker than electrode 1 are produced. Process S21 and process S22 are repeated until two electrodes 1 or one electrode 1 and the remaining portion are produced by one process S2. That is, when the third electrode material is produced, the third electrode material is sliced again as first electrode material 11 by cutting machine 500.

When the thickness of first electrode material 11 is an integral multiple greater than or equal to 3 times the average thickness of electrode 1, and when process S21 and process S22 are repeated, first electrode material 11 is unevenly sliced from first process S22 to last process S22 one time before. In final process S22, first electrode material 11 is evenly sliced.

Electrode 1 produced by slicing first electrode material 11 is sheet 2 having first surface 21 that is the cut section and second surface 22 that is the non-cut section.
The plurality of carbon fibers constituting sheet 2 include the first carbon fiber described above and the plurality of second carbon fibers described above. As described above, the first carbon fiber has the cut section facing first surface 21. The first carbon fiber does not have the cut section facing second surface 22. The plurality of cut sections of the first carbon fibers are arranged on first surface 21. A middle portion of the second carbon fiber in the longitudinal direction faces second surface 22.

When one electrode 1 and one third electrode material are produced by slicing second electrode material 12, electrode 1 is sheet 2 having first surface 21 that is the cut section and second surface 22 that is the cut section. The plurality of carbon fibers constituting sheet 2 include the first carbon fiber having the cut section facing first surface 21 and the first carbon fiber having the cut section facing second surface 22. The plurality of cut sections of the first carbon fibers are arranged side by side on both the first surface 21 and the second surface 22.

When two electrodes 1 are produced as described above by slicing second electrode material 12 or the third electrode material, one electrode 1 is sheet 2 having first surface 21 that is the cut section and second surface 22 that is the non-cut section, and the other electrode 1 is sheet 2 having first surface 21 that is the cut section and second surface 22 that is the cut section.

### [Action and effect of method for manufacturing electrode]

The method for manufacturing the electrode of the embodiment can manufacture electrode 1 described above. In the method for manufacturing the electrode of the embodiment, the width of first electrode material 11 to be sliced is less than or equal to 1000 mm, and the length of first electrode material 11 is less than or equal to 2000 mm. That is, the width of first electrode material 11 is narrow and the length of first electrode material 11 is short. In addition, in the method for manufacturing the electrode of the embodiment, first electrode material 11 is sent to cutting tool 530 by the rotation of first roller 510 and second roller 520 sandwiching first electrode material 11. That is, in the method for manufacturing the electrode of the embodiment, first electrode material 11 is sliced without substantially applying the tension to first electrode material 11. Therefore, in the method for manufacturing the electrode of the embodiment, the same position in the thickness direction of first electrode material 11 is easily cut along the width direction and the length direction of first electrode material 11.

### [RF battery system]

With reference to Figs. 9 and 10, RF battery system 100 of the embodiment will be described. RF battery system 100 includes battery cells 4. Battery cell 4 includes membrane 4M, positive electrode 4P, and negative electrode 4N. Membrane 4M is disposed between positive electrode 4P and negative electrode 4N. At least one of positive electrode 4P and negative electrode 4N is constituted of electrode 1.

RF battery system 100 in Fig. 9 charges and stores power generated by a power generation unit 310, and discharges and supplies the stored power to a load 330. RF battery system 100 is typically connected between power generation unit 310 and load 330 through an AC/DC converter 300 and a transformation installation 320. Examples of power generation unit 310 include a photovoltaic power generation apparatus, a wind power generation apparatus, and other general power plants. An example of load 330 is a consumer of the power. A solid-line arrow extending from transformation installation 320 toward AC/DC converter 300 means charge. A broken-line arrow extending from AC/DC converter 300 toward transformation installation 320 means discharge. RF battery system 100 uses a positive electrode electrolytic solution and a negative electrode electrolytic solution. The positive electrode electrolytic solution and the negative electrode electrolytic solution contain a metal ion in which a valence is changed by oxidation-reduction as an active material. Charge-discharge of RF battery system 100 is performed by utilizing a difference between an oxidation-reduction potential of ions contained in the positive electrode electrolytic solution and an oxidation-reduction potential of ions contained in the negative electrode electrolytic solution. Examples of applications of RF battery system 100 include load leveling, instantaneous voltage drop compensation, emergency power supply, or output smoothing of natural energy such as solar power generation or wind power generation.

### [Basic configuration]

Battery cell 4 included in RF battery system 100 is separated into a positive electrode cell and a negative electrode cell by membrane 4M. Membrane 4M is an ion exchange membrane that does not transmit electrons but transmits, for example, hydrogen ions. Positive electrode 4P is built in the positive electrode cell. Negative electrode 4N is built in the negative electrode cell. The electrolytic solution is circulated through battery cell 4 by a circulation mechanism 6 described later. Circulation mechanism 6 includes a positive electrode circulation mechanism 6P and a negative electrode circulation mechanism 6N. Positive electrode circulation mechanism 6P circulates the positive electrode electrolytic solution to the positive electrode cell. Negative electrode circulation mechanism 6N circulates the negative electrode electrolytic solution to the negative electrode cell.

### [Cell stack]

Battery cell 4 is usually formed inside a structure called a cell stack 200 as illustrated in Fig. 9 and a lower diagram of Fig. 10. Cell stack 200 includes a sub-stack 201, two end plates 220, and a fastening mechanism 230. The lower diagram of Fig. 10 illustrates a form in which cell stack 200 includes a plurality of sub-stacks 201. As illustrated in the lower diagram of Fig. 10, each sub-stack 201 includes a multilayer body and two supply/drainage plates 210. As illustrated in Fig. 9 and the upper diagram of Fig. 10, the multilayer body is formed by laminating pluralities of cell frames 5, positive electrodes 4P, membranes 4M, and negative electrodes 4N in this order. As illustrated in the lower diagram of Fig. 10, supply/drainage plates 210 are disposed at both ends of the multilayer body. A supply pipe 63 and a discharge pipe 65 of positive electrode circulation mechanism 6P and a supply pipe 64 and a discharge pipe 66 of negative electrode circulation mechanism 6N described later are connected to supply/drainage plate 210. Two end plates 220 sandwich the plurality of sub-stacks 201 from the outside of sub-stacks 201 at both ends. Fastening mechanism 230 tightens both end plates 220.

### [Cell frame]

Cell frame 5 includes a bipolar plate 51 and a frame body 52. Frame body 52 surrounds an outer peripheral edge of bipolar plate 51. One battery cell 4 is formed between bipolar plates 51 of adjacent cell frames 5. On one surface of bipolar plate 51, positive electrode 4P is disposed so as to face each other. On the other surface of bipolar plate 51, negative electrode 4N is disposed so as to face each other. Liquid supply slits 53, 54, liquid supply slits 53s, 54s, liquid discharge manifolds 55, 56, and liquid discharge slits 55s, 56s described later are formed in frame body 52. An annular seal member 57 is disposed in an annular seal groove between frame bodies 52.

### [Positive electrode circulation mechanism and negative electrode circulation mechanism]

Positive electrode circulation mechanism 6P includes a positive electrode electrolytic solution tank 61, a supply pipe 63, a discharge pipe 65, and a pump 67. The positive electrode electrolytic solution is stored in positive electrode electrolytic solution tank 61. The positive electrode electrolyte solution flows through supply pipe 63 and discharge pipe 65. Supply pipe 63 connects positive electrode electrolytic solution tank 61 and the positive electrode cell. Discharge pipe 65 connects the positive electrode cell and positive electrode electrolytic solution tank 61. Pump 67 pressure-feeds the positive electrode electrolytic solution in positive electrode electrolytic solution tank 61. Pump 67 is provided in the middle of supply pipe 63.

Negative electrode circulation mechanism 6N includes a negative electrode electrolytic solution tank 62, a supply pipe 64, a discharge pipe 66, and a pump 68. The negative electrode electrolytic solution is stored in negative electrode electrolytic solution tank 62. The negative electrode electrolyte solution flows through supply pipe 64 and discharge pipe 66. Supply pipe 64 connects negative electrode electrolytic solution tank 62 and negative electrode cell. Discharge pipe 66 connects the negative electrode cell and negative electrode electrolytic solution tank 62. Pump 68 pressure-feeds the negative electrode electrolytic solution in negative electrode electrolytic solution tank 62. Pump 68 is provided in the middle of supply pipe 64.

During the operation of the charge-discharge, the flows of the positive electrode electrolytic solution and the negative electrode electrolytic solution are as follows. Pump 67 supplies the positive electrode electrolytic solution from positive electrode electrolytic solution tank 61 to the positive electrode cell through supply pipe 63. The positive electrode electrolytic solution is supplied from liquid supply manifold 53 to positive electrode 4P through liquid supply slit 53s. The positive electrode electrolytic solution supplied to positive electrode 4P flows from the lower side to the upper side of positive electrode 4P as indicated by an arrow in the upper diagram of Fig. 10. The positive electrode electrolytic solution flowing through positive electrode 4P flows through liquid discharge slit 55s and is discharged to liquid discharge manifold 55. The positive electrode electrolytic solution is discharged from the positive electrode cell to positive electrode electrolytic solution tank 61 through discharge pipe 65. Pump 68 supplies the negative electrode electrolytic solution from negative electrode electrolytic solution tank 62 to the negative electrode cell through supply pipe 64. The negative electrode electrolytic solution is supplied from liquid supply manifold 54 to negative electrode 4N through liquid supply slit 54s. The negative electrode electrolytic solution supplied to negative electrode 4N flows from the lower side to the upper side of negative electrode 4N as indicated by the arrow in the upper diagram of Fig. 10. The negative electrode electrolyte solution flowing through negative electrode 4N flows through liquid discharge slit 56s and is discharged to liquid discharge manifold 56. The negative electrode electrolytic solution is discharged from the negative electrode cell to negative electrode electrolytic solution tank 62 through discharge pipe 66. By this supply and discharge, the positive electrode electrolytic solution is circulated to the positive electrode cell, and the negative electrode electrolytic solution is circulated to the negative electrode cell. Pump 67 and pump 68 are stopped during standby in which the charge-discharge is not performed. That is, the positive electrode electrolytic solution and the negative electrode electrolytic solution are not circulated.

### [Electrolytic solution]

At least one selected from the group consisting of manganese ions, vanadium ions, iron ions, polyacids, quinone derivatives, and amines is cited as the positive electrode active material contained in the positive electrode electrolytic solution. At least one selected from the group consisting of titanium ions, vanadium ions, chromium ions, polyacids, quinone derivatives, and amines is cited as the negative electrode active material contained in the negative electrode electrolytic solution. For example, RF battery system 100 may be an all-vanadium RF battery system in which each of the positive electrode active material and the negative electrode active material is a vanadium ion. When the positive electrode electrolytic solution contains manganese ions and when the negative electrode electrolytic solution contains titanium ions, RF battery system 100 having high electromotive force is easy to obtain. An aqueous solution containing at least one acids or acid salts selected from the group consisting of sulfuric acid, phosphoric acid, nitric acid, and hydrochloric acid is cited as a solvent of the positive electrode electrolytic solution and the negative electrode electrolytic solution.

### [Action and effect of RF battery system]

In RF battery system 100 of the embodiment, at least one of positive electrode 4P and negative electrode 4N includes electrode 1, so that the current efficiency is easy to increase and the cell resistivity is easy to reduce.

### «Test example»

A difference in current efficiency and cell resistivity of the battery cell due to a difference in the electrode manufacturing method was examined.

### [Sample Nos. 1 to 3]

The electrodes of sample Nos. 1 to 3 were manufactured by sequentially performing process S1 of preparing the sheet-shaped first electrode material and process S2 of manufacturing the electrode by cutting the first electrode material, similarly to the method of manufacturing the electrode of the embodiment.

### [Process S1]

The first electrode material of each sample is constituted of the nonwoven fabric containing the plurality of carbon fibers. The plurality of carbon fibers include the carbon fiber having the plurality of pleats on the surface. The planar shape of each first electrode material is the rectangular shape. The width and length of each first electrode material are as illustrated in Table 1.

### [Process S2]

In process S2, process S21 of feeding the first electrode material to the cutting tool and process S22 of slicing the first electrode material by the cutting tool such that the thickness of the first electrode material becomes thin were sequentially performed.

In process S2, cutting machine 500 described above with reference to Figs. 6 to 8 was used. The width of first roller 510 and the width of second roller 520 were larger than the width of each first electrode material. The knife was used as cutting tool 530. The installation position of cutting tool 530 was set to the position satisfying both the following requirements (a6) and (b6).
(a6) The electrode and the second electrode material having the thickness larger than the average thickness of the electrode are produced by unevenly slicing the first electrode material.
(b6) The electrode flows downward than the installation position of cutting tool 530, and second electrode material flows upward than the installation position of cutting tool 530.

The average thickness of the electrode of each sample was made different by adjusting at least one of the installation position of first roller 510 and the installation position of second roller 520 with respect to the installation position of cutting tool 530. The distance between the pair of guides 550 was slightly larger than the width of each first electrode material.

In process S21, each first electrode material was fed to cutting tool 530 by the rotation of first roller 510 and second roller 520 that sandwich the first electrode material.

In process S22, the electrode and the second electrode material having the thickness larger than the average thickness of the electrode were produced. In process S22, the produced electrode flowed downward than the installation position of cutting tool 530, and the produced second electrode material flowed upward than the installation position of cutting tool 530. In this example, the number of times of performing processes S21 and S22 was 5 times. That is, the number of electrodes produced from one first electrode material was 6. Process S22 was performed such that the average thicknesses of six electrodes were equal to each other. The thickness of the first electrode material of each sample was set to the thickness at which the average thickness of each electrode becomes a value illustrated in Table 2 by performing processes S21 and S22 five times.

Each electrode has the first surface and the second surface facing each other in the thickness direction. In two of the six electrodes, the first surface is the cut section, and the second surface is the non-cut section. In the remaining four electrodes among the six electrodes, both the first surface and the second surface are the cut sections. Each electrode was cut along the thickness direction of the electrode. The vicinity of the first surface in the section of each electrode was observed by SEM. It was found that each electrode contained the first carbon fiber having the cut section facing the first surface.

The width and length of the electrode of each produced sample were the same as those of the first electrode material of each prepared sample. The average thickness (mm), the first variation (%) in thickness, the second variation (%) in thickness, the first variation (%) in quantity per unit area amount, the second variation (g/m²) in quantity per unit area amount, the quantity per unit area amount (g/m²), the porosity (%) of the electrode of each sample, and the density (g/cm³) of the carbon fiber constituting the electrode of each sample were obtained as described above. The results are illustrated in Table 2. The results in Table 2 are values of one of the six electrodes produced in each sample. In addition, the tensile strength of the electrode of each sample is obtained as described above. As a result, the tensile strength of the electrode of each sample satisfies the range greater than or equal to 40 kPa and less than or equal to 300 kPa. The result of the tensile strength is also the value of one of the six electrodes produced in each sample.

### [Sample Nos. 101 and 102]

The electrode of sample No. 101 and the electrode of sample No. 102 were manufactured by the manufacturing method different from the method for manufacturing the electrodes of sample Nos. 1 to 3. In the method for manufacturing the electrode of sample No. 101 and the electrode of sample No. 102, the size of the electrode material to be prepared and the method for cutting the electrode material are different from the methods for manufacturing the electrodes of sample Nos. 1 to 3. The electrode of sample No. 101 and the electrode of sample No. 102 were manufactured by sequentially performing a process S100 of preparing the roll-shaped electrode material and a process S200 of producing the electrode by cutting the electrode material.

### [Process S100]

The electrode material of each sample is constituted of the nonwoven fabric containing the plurality of carbon fibers. The width and length of each electrode material are as illustrated in Table 1.

### [Process S200]

In process S200, the thickness of the electrode material is evenly sliced by the cutting tool. In process S200, a first cutting machine different from cutting machine 500 is used.

The first cutting machine includes a supply reel, an upper roller, a lower roller, a cutting tool, and two winding reels. A roll-shaped electrode material is installed in the supply reel. The supply reel is a driven reel. The upper roller and the lower roller are not mainly feed rollers feeding the electrode material to the cutting tool, but are guide rollers regulating positional displacement of the electrode material in the vertical direction. That is, the upper roller and the lower roller are not driving rollers, but driven rollers. The width of the upper roller and the width of the lower roller were larger than the width of each electrode material. The knife was used as the cutting tool. The cutting tool was installed at the position where the thickness of the electrode material can be evenly sliced. Each winding reel winds each of the two produced long sheets. Each winding reel is a drive reel. Each of the two long sheets is wound by each winding reel, whereby the electrode material installed on the supply reel is unwound. By winding each winding reel, the electrode material is sliced while the tension along the traveling direction of the electrode material is applied to the electrode material.

The number of times of performing process S200 is plural. Each long sheet wound into a roll shape by each winding reel is installed on the supply reel and evenly sliced in thickness by the cutting tool as described above. The number of long sheets produced from one electrode material was greater than or equal to 4. The thickness of the electrode material of each sample was set to the thickness at which the average thickness of each long sheet becomes the value in Table 2 by performing process S200 the plurality of times. The electrode of each sample is obtained by cutting the long sheet of each sample to a predetermined length.

The width and length of the long sheet of each produced sample were the same as those of the electrode material of each prepared sample. The average thickness (mm) of the long sheet, the first variation (%) in thickness, the second variation (%) in thickness, the first variation (%) in quantity per unit area amount, the second variation (g/m²) in quantity per unit area amount, the quantity per unit area amount (g/m²), the porosity (%) of each sample, and the density (g/cm³) of the carbon fibers constituting the long sheet of each sample were obtained in the same manner as in sample No. 1 and the like. The results are illustrated in Table 2. The results in Table 2 are values of one of at least four produced long sheets.

**[Table 1]**

| Sample No. | First electrode material | |
|---|---|---|
| | Width | Length |
| | mm | mm |
| 1 | 900 | 2000 |
| 2 | 450 | 950 |
| 3 | 350 | 500 |

| Sample No. | Electrode material | |
|---|---|---|
| | Width | Length |
| | mm | mm |
| 101 | 1450 | 5000 |
| 102 | 1200 | 10000 |

**Table 2**

| Sample No. | Electrode | | | | | | | | | Carbon fiber |
|---|---|---|---|---|---|---|---|---|---|---|
| | Width | Length | Average thickness | First variation in thickness | Second variation in thickness | First variation in quantity per unit area amount | Second variation in quantity per unit area amount | Quantity per unit area amount | Porosity | Density |
| | mm | mm | mm | % | % | % | g/m² | g/m² | % | g/cm³ |
| 1 | 900 | 2000 | 2.2 | 11 | 16 | 11 | 47 | 350 | 89 | 1.5 |
| 2 | 450 | 950 | 1 | 6 | 7 | 7 | 12 | 120 | 94 | 2 |
| 3 | 350 | 500 | 0.7 | 2 | 3 | 2 | 4 | 75 | 94 | 1.9 |

| Sample No. | Long sheet | | | | | | | | | Carbon fiber |
|---|---|---|---|---|---|---|---|---|---|---|
| | Width | Length | Average thickness | First variation in thickness | Second variation in thickness | First variation in quantity per unit area amount | Second variation in quantity per unit area amount | Quantity per unit area amount | Porosity | Density |
| | mm | mm | mm | % | % | % | g/m² | g/m² | % | g/cm³ |
| 101 | 1450 | 5000 | 1.4 | 28 | 40 | 29 | 84 | 200 | 91 | 1.6 |
| 102 | 1200 | 10000 | 0.6 | 53 | 76 | 57 | 60 | 72 | 94 | 2 |

### [Evaluation of battery reactivity]

A unit cell battery was produced using the electrode of each sample, and the current efficiency and the cell resistivity were measured. The unit cell battery is a battery having one positive electrode, one membrane, and one negative electrode. The unit cell battery was configured by laminating a first cell frame, a positive electrode, a membrane, a negative electrode, and a second cell frame in this order. The membrane is sandwiched between the positive electrode and the negative electrode. The first cell frame is disposed such that the bipolar plate provided in the first cell frame is in contact with the positive electrode. The second cell frame is disposed such that the bipolar plate provided in the second cell frame is in contact with the negative electrode. The electrodes of sample Nos. 1 to 3, 101, and 102 were used as the positive electrode and the negative electrode. The width and length of the electrode of each sample were set to the same. At this point, the electrodes of sample Nos. 1 and 2, and the long sheets of sample Nos. 101 and 102 were cut, the widths of the electrodes of sample Nos. 1, 2, 101, and 102 were set to 350 mm, and the lengths of the electrodes of sample Nos. 1, 2, 101, and 102 were set to 500 mm. For each of the positive electrode electrolytic solution and the negative electrode electrolytic solution, the vanadium sulfate solution containing the vanadium ions was used as the active material.

The battery cell of each sample was charged and discharged at a constant current with the current density of 90 mA/cm². In this test, the charge-discharge of a plurality of cycles were performed. In this test, when a previously-set predetermined switching voltage was reached, the charge was switched to the discharge, and when the previously-set predetermined switching voltage was reached, the discharge was switched to the charge. The switching voltage from the charge to the discharge was set to 1.62 V. The switching voltage from the discharge to the charge was set to 1.0 V.

After the charge-discharge, the current efficiency (%) and the cell resistivity (Ω·cm²) of each sample were obtained.

The current efficiency was a value obtained by averaging the values calculated by (total discharge time/total charge time) × 100 for each cycle.

The cell resistivity was calculated from { (difference between average voltage during charge and average voltage during discharge)/(average current/2)} × effective area of electrode. The effective area was set to 320 mm × 470 mm. The average voltage during the charge and the average voltage during the discharge were set to average voltages in any one cycle in the plurality of cycles.

The results are illustrated in Table 3.

**[Table 3]**

| Sample No. | Current efficiency | Cell resistivity |
|---|---|---|
| | % | Ω·cm² |
| 1 | 97.1 | 0.41 |
| 2 | 97.5 | 0.38 |
| 3 | 97.8 | 0.43 |
| 101 | 96 | 0.56 |
| 102 | 96.6 | 0.61 |

As illustrated in Table 2, the first variation in thickness and the second variation in thickness of each of the electrodes of sample Nos. 1 to 3 were smaller than those of the long sheets of sample Nos. 101 and 102. In addition, in each of the electrodes of sample Nos. 1 to 3, the first variation in quantity per unit area amount and the second variation in quantity per unit area amount were smaller than those in each of the long sheets of sample Nos. 101 and 102. As illustrated in Table 3, each of the unit cell batteries using the electrodes of sample Nos. 1 to 3 had higher current efficiency and lower cell resistivity than each of the unit cell batteries using the long sheets of sample Nos. 101 and 102. From this result, it was found that each of the electrodes of sample Nos. 1 to 3 can construct the battery cell having excellent battery performance as compared with each of the long sheets of sample Nos. 101 and 102.

In addition, the long sheet of sample No. 200 is produced in the same manner as sample No. 101 except that the width of the electrode material is less than or equal to 1000 mm. That is, the electrode material is evenly sliced while the tension along the traveling direction of the electrode material acts on the electrode material having the width less than or equal to 1000 mm. The first variation (%) in thickness, the second variation (%) in thickness, the first variation (%) in quantity per unit area amount, and the second variation (g/m²) in quantity per unit area amount of the produced long sheet of sample No. 200 are obtained in the same manner as the long sheet of sample No. 101. As a result, it is considered that the first variation in thickness, the second variation in thickness, the first variation in quantity per unit area amount, and the second variation in quantity per unit area amount of the long sheet of sample No. 200 have the same results as those of the long sheet of sample No. 101. Then, the current efficiency and the cell resistivity of the unit cell battery using the long sheet of sample No. 200 as the electrode are obtained in the same manner as sample No. 101. As a result, it is considered that the current efficiency and the cell resistivity of the unit cell battery of sample No. 200 are similar to those of the unit cell battery of sample No. 101. Consequently, the unit cell battery of sample No. 200 is considered to be inferior in the battery performance as compared with the unit cell batteries of sample Nos. 1 to 3.

The present invention is not limited to the examples, but includes meanings equivalent to the claims and all changes within the scope.

### REFERENCE SIGNS LIST

100: RF battery system
1: electrode
2: sheet
21: first surface, 22: second surface
30: carbon fiber, 35: pleat
4: battery cell, 4M: membrane, 4P: positive electrode, 4N: negative electrode
5: cell frame, 51: bipolar plate, 52: frame body
53, 54: liquid supply manifold, 53s, 54s: liquid supply slit
55, 56: liquid discharge manifold, 55s, 56s: liquid discharge slit
57: seal member
6: circulation mechanism, 6P: positive electrode circulation mechanism, 6N: negative electrode circulation mechanism
61: positive electrode electrolytic solution tank, 62: negative electrode electrolytic solution tank
63, 64: supply pipe, 65, 66: discharge pipe, 67, 68: pump
200: cell stack, 201: sub-stack
210: supply/drainage plate, 220: end plate, 230: fastening mechanism
300: AC/DC converter, 310: power generation unit
320: transformation installation, 330: load
500: cutting machine
510: first roller, 520: second roller
530: cutting tool, 540: table, 550: guide
11: first electrode material, 12: second electrode material
Wa, Wb, Wr: width, La, Lb, a, b: length
P1: first intersection, P2: second intersection, P3: third intersection
P4: fourth intersection, P5: fifth intersection, P6: sixth intersection
V1: first virtual line, V2: second virtual line, V3: third virtual line
V4: fourth virtual line, V5: fifth virtual line
R: virtual rectangle.

## Claims

1. An electrode used in a battery system,
the electrode comprising a sheet made of a nonwoven fabric containing a plurality of carbon fibers,
wherein the sheet includes a first surface and a second surface that face each other in a direction along a thickness of the sheet,
the plurality of carbon fibers include a first carbon fiber,
the first carbon fiber includes at least one of a cut section facing the first surface and a cut section facing the second surface,
a width of the sheet is less than or equal to 1000 mm, and
a length of the sheet is less than or equal to 2000 mm.

2. The electrode according to claim 1, wherein an average thickness of the sheet is greater than or equal to 0.5 mm and less than or equal to 3 mm.

3. The electrode according to claim 1 or 2, wherein the length of the sheet is greater than or equal to 500 mm.

4. The electrode according to any one of claims 1 to 3, wherein a variation in thickness of the sheet is less than or equal to 25%.

5. The electrode according to any one of claims 1 to 4, wherein a variation in quantity per unit area amount of the sheet is less than or equal to 25%.

6. The electrode according to any one of claims 1 to 5, wherein the quantity per unit area amount of the sheet is greater than or equal to 50 g/m² and less than or equal to 350 g/m².

7. The electrode according to any one of claims 1 to 6, wherein the plurality of carbon fibers include a carbon fiber having a plurality of pleats on a surface of the carbon fiber.

8. The electrode according to any one of claims 1 to 7, wherein density of the plurality of carbon fibers is greater than or equal to 1.5 g/cm³ and less than or equal to 2.2 g/cm³, and
a porosity of the sheet is greater than or equal to 60% and less than or equal to 99%.

9. A battery cell comprising the electrode according to any one of claims 1 to 8.

10. A cell stack comprising a plurality of the battery cells according to claim 9.

11. A battery system comprising the battery cell according to claim 9 or the cell stack according to claim 10.

12. A method for manufacturing an electrode used in a battery system, the method comprising:
preparing a sheet-like first electrode material that has a width less than or equal to 1000 mm and a length less than or equal to 2000 mm and is made of a nonwoven fabric containing a plurality of carbon fibers; and
producing the electrode by cutting the first electrode material,
wherein the producing the electrode includes:
feeding the first electrode material to a cutting tool by rotation of a first roller and a second roller that sandwich the first electrode material; and
slicing the first electrode material with the cutting tool such that a thickness of the first electrode material becomes thin.

13. The method for manufacturing the electrode according to claim 12, wherein in the slicing the first electrode material, the first electrode material is sliced such that an average thickness of the electrode is greater than or equal to 0.5 mm and less than or equal to 3 mm.

14. The method for manufacturing the electrode according to claim 12 or 13, wherein
in the preparing the first electrode material, the first electrode material having the thickness greater than twice the average thickness of the electrodes is prepared, and
in the slicing the first electrode material, the first electrode material is sliced such that the electrode and a second electrode material having the thickness larger than the average thickness of the electrode are produced.

15. The method for manufacturing the electrode according to any one of claims 12 to 14, wherein
in the preparing the first electrode material, the first electrode material having the thickness that is an integral multiple greater than or equal to three times the average thickness of the electrodes is prepared, and
in the slicing the first electrode material, the first electrode material is sliced such that the electrode and the second electrode material having the thickness larger than the average thickness of the electrode are produced.

16. The method for manufacturing the electrode according to claim 14 or 15, wherein in the slicing the first electrode material, the first electrode material is sliced such that the electrode flows downward than an installation position of the cutting tool and such that the second electrode material flows upward than the installation position.

17. The method for manufacturing the electrode according to any one of claims 12 to 16, wherein in the feeding the first electrode material to the cutting tool, the first electrode material is fed to the cutting tool while a guide regulates displacement in a width direction of the first electrode material.
